Europäisches Patentamt

European Patent Office

Office européen des brevets

(19)

(11) **EP 1 021 315 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **98936212.4**

(22) Anmeldetag: **18.06.1998**

(51) Int Cl.⁷: **B60R 21/00**, B60R 21/32

(86) Internationale Anmeldenummer:
**PCT/DE98/01669**

(87) Internationale Veröffentlichungsnummer:
**WO 99/017962 (15.04.1999 Gazette 1999/15)**

(54) **ANORDNUNG ZUM ERZEUGEN EINES AUSLÖSESIGNALS FÜR EINE SICHERHEITSEINRICHTUNG IN EINEM FAHRZEUG BEI EINEM ÜBERROLLVORGANG**

DEVICE FOR PRODUCING A SIGNAL TO INITIATE ACTUATION OF A SECURITY SYSTEM IN A VEHICLE MAKING AN OVERTURN

DISPOSITIF POUR GENERER UN SIGNAL DECLENCHEUR DE SYSTEME DE SECURITE DANS UN VEHICULE LORS D'UN ACCIDENT AVEC RETOURNEMENT

(84) Benannte Vertragsstaaten:
**DE FR GB IT SE**

(30) Priorität: **06.10.1997 DE 19744083**

(43) Veröffentlichungstag der Anmeldung:
**26.07.2000 Patentblatt 2000/30**

(73) Patentinhaber: **ROBERT BOSCH GMBH**
**70442 Stuttgart (DE)**

(72) Erfinder:
 • **MATTES, Bernhard**
 **D-74343 Sachsenheim (DE)**
 • **BREUNIG, Volker**
 **D-74078 Heilbronn (DE)**
 • **HENNE, Michael**
 **D-74374 Zaberfeld (DE)**
 • **GROESCH, Lothar**
 **D-70374 Stuttgart (DE)**

(56) Entgegenhaltungen:
 **EP-A- 0 430 813          DE-A- 19 609 176**
 **DE-A- 19 609 717**

**Beschreibung**

Stand der Technik

Die vorliegende Erfindung betrifft eine Anordnung zum Erzeugen eines Auslösesignals für eine Sicherheitseinrichtung in einem Fahrzeug bei einem Überrollvorgang, wobei erste Mittel vorgesehen sind, die aus der um die Längsachse des Fahrzeugs gemessenen Drehrate ein erstes Entscheidungskriterium für das Auslösen einer Sicherheitseinrichtung im Fahrzeug herleiten, und wobei zweite Mittel vorgesehen sind, die unabhängig von den ersten Mitteln aus der in Richtung der Querachse des Fahrzeugs gemessenen Beschleunigung ein zweites Entscheidungskriterium für das Auslösen der Sicherheitseinrichtung herleiten.

Falls es zu einem Überschlag eines Fahrzeugs kommt, müssen rechtzeitig alle im Fahrzeug installierten Insassen-Schutzeinrichtungen ausgelöst werden, dazu gehören beispielsweise Überrollbügel, Gurtstraffer, Front- und Seitenairbags etc.. Damit all diese Schutzeinrichtungen rechtzeitig ausgelöst werden können, muß möglichst früh erkannt werden, ob Drehungen des Fahrzeugs um seine Längsachse, seine Querachse oder Hochachse zu einem Überschlag führen werden. In der Regel kommen Überrollvorgänge um die Längsachse des Fahrzeugs vor, Drehungen des Fahrzeugs um seine Hochachse und seine Querachse treten nur selten auf. Die Sicherheitseinrichtungen im Fahrzeug sollten auch nur dann ausgelöst werden, wenn es tatsächlich zu einem Überrollen des Fahrzeugs kommt.

Aus der EP 0 430 813 A1 geht eine einleitend dargelegte Anordnung zum Erzeugen eines Auslösesignals für eine Sicherheitseinrichtung bei einem Überrollvorgang eines Fahrzeugs hervor. Zur Erfassung verschiedener Überrollvorgänge eines Fahrzeugs werden die Ausgangssignale eines Drehratensensors und dreier Beschleunigungssensoren ausgewertet. Um verschiedene Arten von Überrollsituationen erkennen zu können, sind mehrere Kombinationen der vier Sensorsignale vorgesehen. Die sich aus den unterschiedlichen Sensorsignalauswertungen ergebenden Auslösesignale werden hier einem ODER-Gatter zugeführt, das einen Zündbefehl an eine Zündeinrichtung für Überrollbügel oder andere Sicherheitseinrichtungen weiterleitet, wenn eines der möglichen Auslösesignale an seinen Eingängen anliegt.

Bei einem seitlichen Aufprall eines Fahrzeugs auf ein niedriges Hindernis, z. B. einen Bordstein, erfährt das Fahrzeug eine recht starke Kippbewegung, die zum Überrollen führt. Es ist nun die Aufgabe der Erfindung, eine Anordnung der eingangs genannten Art anzugeben, die gerade in dem genannten Fall in der Lage ist, einen Überrollvorgang eines Fahrzeugs rechtzeitig und mit großer Zuverlässigkeit zu erkennen.

Vorteile der Erfindung

Die genannte Aufgabe wird mit den Merkmalen des Anspruchs 1 gelöst.

Wie aus dem Unteranspruch hervorgeht, ist es vorteilhaft, ein weiteres Entscheidungskriterium hinzuzuziehen. Dazu führt die Schaltung parallel zu den Schwellwertentscheidungen der Drehrate um die Längsachse und der Beschleunigung in Richtung der Querachse eine zweite Schwellwertentscheidung bezüglich der Beschleunigung in Richtung der Querachse durch, wobei der zweiten Schwellwertentscheidung eine andere Beschleunigungsschwelle zugrunde liegt als der ersten Schwellwertentscheidung. Der Parallelzweig entscheidet, sobald die andere Beschleunigungsschwelle für eine bestimmte Zeitdauer überschritten worden ist, auf ein Auslösen der Sicherheitseinrichtung, und die Schaltung gibt das Auslösesignal nur dann ab, wenn in beiden Schaltungszweigen gleichzeitig auf Auslösen entschieden worden ist.

Beschreibung von Ausführungsbeispielen

Anhand mehrerer in der Zeichnung dargestellter Ausführungsbeispiele wird nachfolgend die Erfindung näher erläutert. Es zeigen:

Figur 1 ein Blockschaltbild einer Anordnung zum Erzeugen eines Auslösesignals für eine Sicherheitseinrichtung bei einem Überrollvorgang eines Fahrzeugs,
Figur 2 eine schematische Darstellung eines Fahrzeugs mit einer Geometrie zur Berechnung der Kipplage des Fahrzeugs nach einer ersten Art,
Figur 3 eine schematische Darstellung eines Fahrzeugs mit einer Geometrie zur Berechnung seiner Kipplage nach einer zweiten Art und
Figur 4 ein Ablaufdiagramm für die Ermittlung einer Überroll-Information.

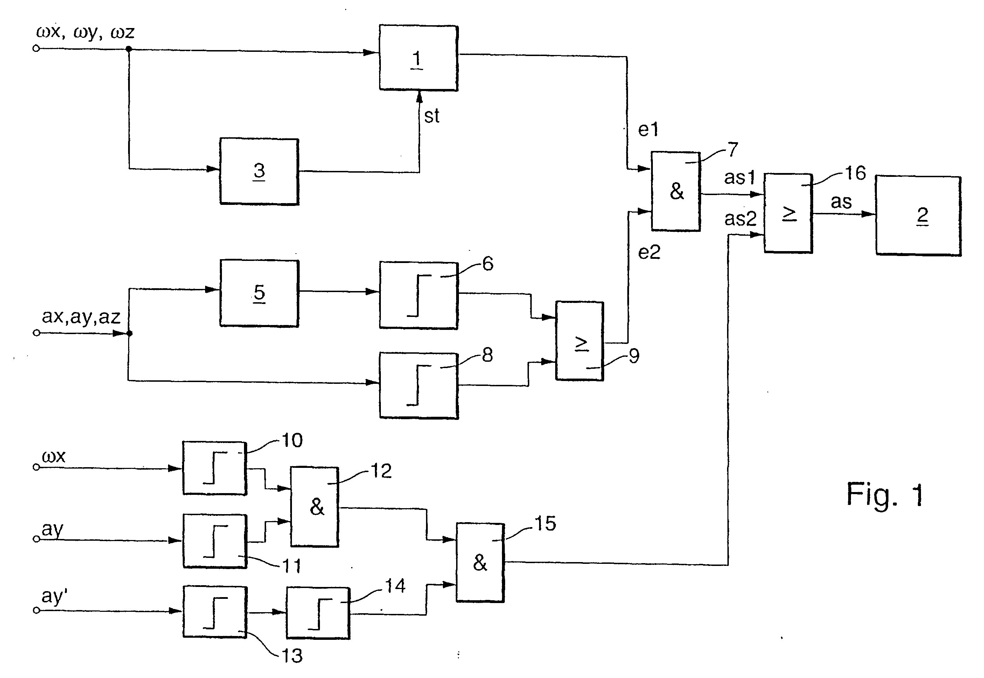

Wie der Figur 1 zu entnehmen ist, liegen am Eingang eines ersten Signalzweiges Drehratensignale $\omega x$, $\omega y$ und $\omega z$, die von Drehratensensoren um die Längsachse x, die Querachse y und die Hochachse z eines Fahrzeugs gemessen worden sind. Die Drehratensignale $\omega x$, $\omega y$ und $\omega z$ werden einem Schaltblock 1 mit einem Integrator zugeführt, der aus den Drehraten Neigungswinkel des Fahrzeugs gegenüber seinen Achsen bildet. Aus den Neigungswinkeln wird in einer nachfolgend noch näher beschriebenen Recheneinheit im Schaltblock 1 ein erstes Entscheidungskriterium e1 für das Auslösen einer Sicherheitseinrichtung 2, die z.B. aus ein oder mehreren Airbags und Gurtstraffern bestehen kann, abgeleitet.

Die von den Drehratensensoren gelieferten Ausgangssignale enthalten meist einen Offset, der von verschiedenen Größen wie z.B. der Temperatur und Alterung abhängt. Wegen dieses Offsets würde eine dauernde Integration der Drehratensignale zu Neigungswinkeln führen, die nicht von Fahrzeugdrehungen sondern vom Offset herrühren. Um diesen Fehler zu vermeiden, wird dem Integrator im Schaltblock 1 ein Startsignal st zugeführt, das angibt, ab welcher Drehrate die Integration begonnen werden soll. Das Startsignal st wird von einem Schaltblock 3 gebildet, der die Drehraten $\omega x$, $\omega y$ und $\omega z$ nach einer Filterung mit einer Schwelle vergleicht. Übersteigt der Betrag der Drehraten diese empirisch ermittelte Schwelle, so wird das Startsignal st an den Integrator 1 abgegeben. Damit werden Störeinflüsse auf die Drehratenmessung, wie z.B. der angesprochene Offset oder Brems- und Beschleunigungsmanöver, von der Integration ausgeschlossen.

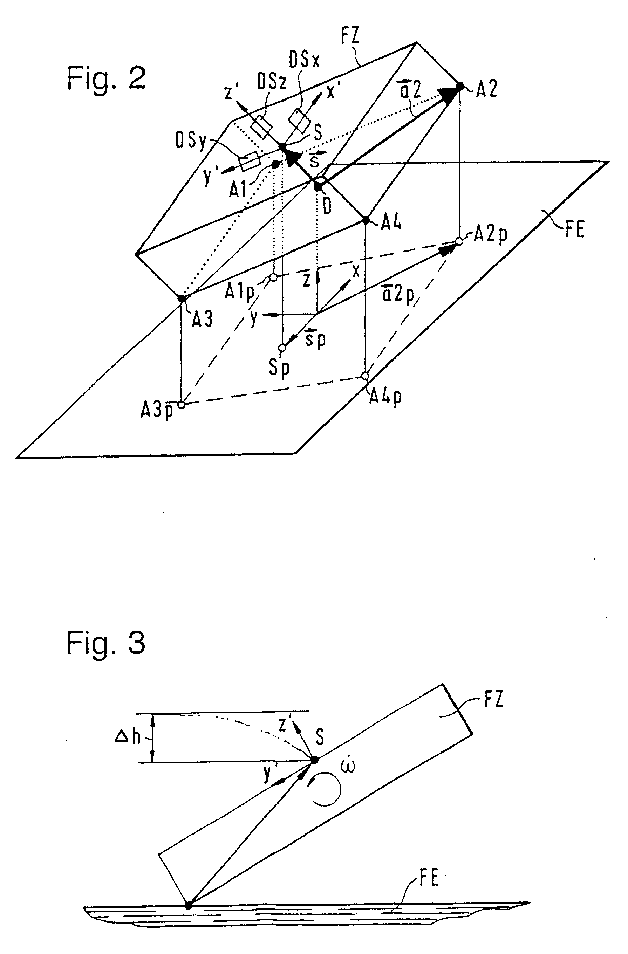

Anhand der Figuren 2, 3 und 4 wird nun ein möglicher geeigneter Algorithmus beschrieben, nach dem die Recheneinheit im Schaltblock das erste Entscheidungskriterium e1 für ein Auslösen der Sicherheitseinrichtung 2 ermittelt.

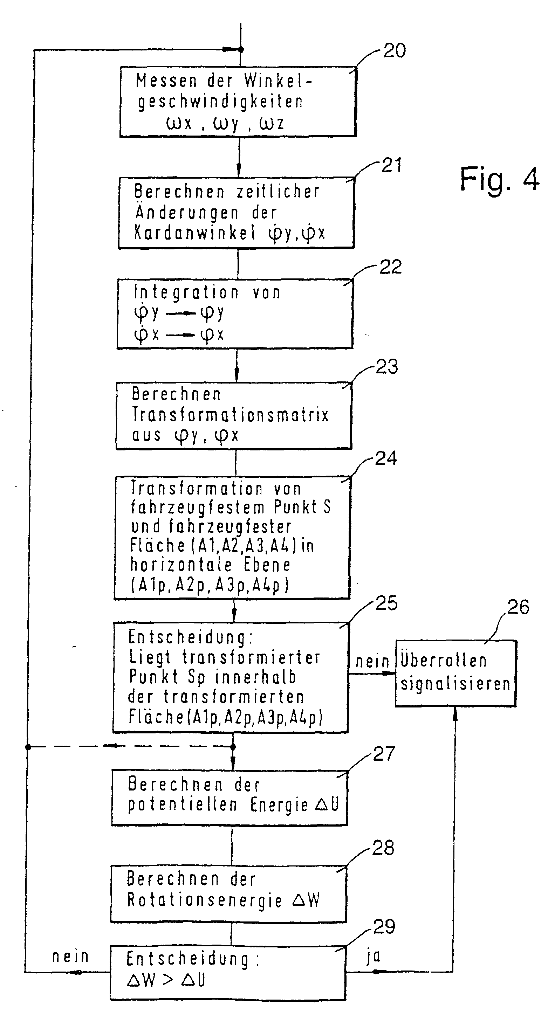

In der Figur 2 ist schematisch ein Fahrzeug FZ dargestellt, das sich über eine horizontalen Ebene FE, vorzugsweise der Fahrbahnebene, in einer Kipplage befindet. Im Fahrzeug FZ sind Drehratensensoren DSx, DSy und DSz, welche die Winkelgeschwindigkeiten $\omega x$, $\omega y$ und $\omega z$ um die Längsachse x, die Querachse y und die Hochachse z des gekippten Fahrzeugs messen. Das Zentrum dieses Koordinatensystems ist ein fiktiv gewählter Fahrzeugfestpunkt S, vorzugsweise der Fahrzeugschwerpunkt. Gemäß dem in der Figur 4 dargestellten Ablaufdiagramm wird die Messung der Winkelgeschwindigkeiten $\omega x$, $\omega y$ und $\omega z$ in dem Verfahrensschritt 20 durchgeführt.

Im Verfahrensschritt 21 werden aus den Winkelgeschwindigkeiten $\omega x$, $\omega y$ und $\omega z$ gemäß Gleichung (1) die zeitlichen Änderungen $\dot{\varphi}x$ und $\dot{\varphi}y$ der Kardanwinkel $\varphi x$ und $\varphi y$ bezüglich der Längsachse x und der Querachse y berechnet:

$$\begin{pmatrix} \dot{\varphi}y \\ \dot{\varphi}x \end{pmatrix} = \begin{pmatrix} 0 & \cos\varphi y & -\sin\varphi x \\ 1 & \tan\varphi y \sin\varphi x & \tan\varphi y \cos\varphi x \end{pmatrix} \begin{pmatrix} \omega x \\ \omega y \\ \omega z \end{pmatrix} \qquad (1)$$

Der Kardanwinkel $\varphi z$ wird nicht benötigt, weil ein Drehen um die Hochachse des Fahrzeugs für das Überrollen praktisch nicht relevant ist. Durch Integration der zeitlichen Änderungen der Kardanwinkel $\dot{\varphi}x$ und $\dot{\varphi}y$ werden im Verfahrensschritt 22 die Kardanwinkel $\varphi x$ und $\varphi y$ berechnet. Aus den Kardanwinkeln $\varphi x$ und $\varphi y$ wird im Verfahrensschritt 23 die in Gleichung 2 angegebene Transformatrionsmatrix T berechnet:

$$T = \begin{pmatrix} \cos\varphi y & \sin\varphi x \bullet \sin\varphi y & \cos\varphi x \bullet \sin\varphi y \\ 0 & \cos\varphi x & -\sin\varphi x \\ -\sin\varphi y & \sin\varphi x \bullet \cos\varphi y & \cos\varphi x \bullet \cos\varphi y \end{pmatrix} \qquad (2)$$

Für die weiteren Berechnungen wird neben dem bereits oben erwähnten Fahrzeugschwerpunkt S eine fahrzeugfeste Fläche vorgegeben. Diese fahrzeugfeste Fläche ist in der Figur 2 zwischen den Punkten A1, A2, A3 und A4 aufgespannt, wobei diese Punkte beispielsweise die Radaufstandspunkte des Fahrzeugs sein können. Die Koordinaten der Punkte A1, A2, A3 und A4 bezüglich des fahrzeugeigenen Koordinatensystems (x, y, z) lassen sich durch Vektoren beschreiben, welche von einem in der fahrzeugfesten Fläche liegendem Punkt D ausgehen. In der Figur 2 ist beispielhaft der Vektor $\vec{a}2$ vom Punkt D zum Eckpunkt A2 angegeben. Diese vom Punkt D zu den Eckpunkten A1, A2, A3 und A4 gehenden Vektoren besitzen nur x- und y-Komponenten, weil deren Ausgangspunkt D durch Projektion des Koordinatenschnittpunktes S auf die zwischen den Punkten A1, A2, A3, A4 aufgespannte Fläche entstanden ist. Der Vektor $\vec{s}$ vom Punkt D zum Punkt S hat nur eine z-Komponente. Durch diese Wahl der Vektoren $\vec{s}$ und $\vec{a}i$ (i = 1, 2, 3, 4) gibt es ein Minimum an Vektorkomponenten, wodurch sich alle weiteren Berechnungen stark vereinfachen.

Durch die im Verfahrensschritt 24 mittels der zuvor berechneten Transformationsmatrix T ausgeführte Transformation der zwischen den Eckpunkten A1, A2, A3 und A4 aufgespannten fahrzeugfesten Fläche und des fahrzeugfesten Punktes S werden sowohl die fahrzeugfeste Fläche und der fahrzeugfeste Punkt S in eine horizontale Ebene projiziert. Dabei entsteht in der horizontalen Ebene eine strichliert umrandete Fläche, welche zwischen den zu den Punkten A1, A2, A3 und A4 gehörenden Projektionspunkten A1p, A2p, A3p, A4p aufgespannt ist. In derselben horizontalen Ebene liegt auch der zum fahrzeugfesten Punkt S gehörende Projektionspunkt Sp. Der auf die horizontale Ebene projizierte Punkt D bildet den Ursprung eines Koordinatensystems mit den Achsen x', y' und z', wobei die z'-Achse in Projektionsrichtung liegt. Die vom Ursprung dieses Koordinatensystems x', y', z' ausgehende und zu den Eckpunkten A1p, A2p, A3p und A4p der projizierten flächeführenden Vektoren $\vec{a}$ip (i = 1, 2, 3, 4) gehen aus der Multiplikation der entsprechenden Vektoren $\vec{a}$i des fahrzeugeigenen Koordinatensystems mit der Transformationsmatrix T gemäß Gleichung (2) hervor. Ebenso wird der den Ort des projizierten Punktes Sp beschreibende Vektor $\vec{s}$p durch Multiplikation der Transformationsmatrix T mit dem Vektor $\vec{s}$ in dem fahrzeugeigenen Koordinatensystem gebildet. Mit Hilfe der Vektoren $\vec{a}$ip und $\vec{s}$p läßt sich im Verfahrensschritt 25 entscheiden, ob der Punkt Sp innerhalb oder außerhalb der zwischen den Punkten A1p, A2p, A3p und A4p aufgespannten Fläche liegt. Liegt der Punkt Sp außerhalb dieser Fläche, so kommt es mit Sicherheit zu einem Überrollen des Fahrzeugs. Dementsprechend wird in einem Verfahrensschritt 26 ein Überrollen signalisiert, das heißt, es wird das erste Entscheidungskriterium e1 abgegeben für ein Auslösen der Sicherheitseinrichtung 2.

Der Figur 4 ist zu entnehmen, daß sich an den Verfahrensschritt 25 noch drei weitere Verfahrensschritte 27, 28 und 29 anschließen. In diesen drei Verfahrensschritten 28, 28 und 29 wird ein Kriterium für ein Überrollen nach einer anderen Methode abgeleitet. Diese Verfahrensschritte sind entweder, wie in der Figur 4 dargestellt, an das zuvor beschriebene Berechnungsverfahren angehängt oder sie werden alleine ohne das andere Verfahren oder parallel zu dem anderen Verfahren durchgeführt.

Im Verfahrensschritt 27 wird eine potentielle Energie ΔU berechnet, welche erforderlich ist, um das Fahrzeug aus seiner momentanen Lage in eine instabile Lage zu bringen, aus der heraus sich das Fahrzeug überschlägt. Wie in der Figur 3 verdeutlicht worden ist, müßte der fahrzeugfeste Punkt S aus der dargestellten momentanen Lage seinen Abstand gegenüber der horizontalen Ebene FE um einen Betrag Δh vergrößern. Dann hätte nämlich der fahrzeugfeste Punkt seinen maximalen Abstand gegenüber der horizontalen Ebene FE erreicht. Würde das Fahrzeug sich soweit drehen, daß der fahrzeugfeste Punkt diesen maximalen Abstand gegenüber der horizontalen Ebene FE erreicht, so käme es unweigerlich zu einem Überrollen des Fahrzeugs. Die potentielle Energie ΔU wird im Verfahrensschritt 27 gemäß Gleichung (3) berechnet:

$$\Delta U = m\, g\, \Delta h \tag{3}$$

Dabei ist m die bekannte Masse des Fahrzeugs und g die Erdbeschleunigung. Die Differenz Δh zwischen dem momentanen Abstand des fahrzeugfesten Punktes S gegenüber der horizontalen Ebene FE und dem besagten maximalen Abstand kann durch einfache geometrische Berechnungen aus den Fahrzeugabmessungen und der zuvor bereits berechneten Transformationsmatrix T ermittelt werden. Im nächsten Verfahrensschritt 28 wird die Rotationsenergie Δw des Fahrzeugs gemäß Gleichung (4) berechnet:

$$\Delta W = \frac{1}{2}\, \Theta\, \omega^2 \tag{4}$$

Dabei ist mit Θ das Massenträgheitsmoment des Fahrzeugs bezeichnet, und ω ist eine mit den Drehratensensoren gemessene Winkelgeschwindigkeit um eine Fahrzeugachse. Im Verfahrensschritt 29 wird entschieden, ob die Rotationsenergie ΔW größer ist als die potentielle Energie ΔU. Ist das der Fall, so wird es mit Sicherheit zu einem Überrollen des Fahrzeugs kommen. Dementsprechend wird ein Überrollen signalisiert, womit das Entscheidungskriterium e1 erfüllt ist.

Durch die in den Verfahrensschritten 27, 28 und 29 angewandte Energiebetrachtung kann frühzeitig ein Überrollen des Fahrzeugs prognostiziert werden, so daß rechtzeitig vor dem tatsächlichen Überrollen die Sicherheitseinrichtung ausgelöst werden kann.

Parallel zu dem eben beschriebenen ersten Signalpfad gibt es einen zweiten Signalpfad, der die Beschleunigungen ax, ay und az in Richtung seiner Längsachse x, seiner Querachse y und seiner Hochachse z zu einem zweiten Entscheidungskriterium e2 verarbeitet. Dieser Signalpfad enthält eine Recheneinheit 5 und einen Schwellwertentscheider 6. In der Recheneinheit 5 wird aus der gemessenen Beschleunigung az in Richtung der Hochachse z und aus der gemessenen Beschleunigung ay in Richtung der Querachse der Kippwinkel φx des Fahrzeugs gegenüber seiner Längsachse x berechnet durch:

$$\varphi x = \arctan \frac{ay}{az} \tag{5}$$

Wenn auch noch der Nickwinkel des Fahrzeugs um seine Querachse y berechnet werden soll, so geschieht das nach Gleichung (6):

$$\varphi y = \arctan \frac{ax}{az} \tag{6}$$

Nach der Berechnung des Kippwinkels $\varphi x$ und/oder des Nickwinkels $\varphi y$ werden diese einer Schwellwertentscheidung 6 unterzogen. Überschreitet der Kippwinkel $\varphi x$ und/oder der Nickwinkel $\varphi y$ eine empirisch ermittelte Schwelle, so ist das zweite Entscheidungskriterium e2 erfüllt. Es werden also im ersten Signalpfad und im zweiten Signalpfad zwei Entscheidungskriterien e1 und e2 für das Auslösen der Sicherheitseinrichtungen auf unterschiedliche Art und Weise ermittelt. Es werden sogar andere Sensorsignale verwendet, in dem einen Fall Drehratensignale und in dem anderen Fall Beschleunigungssignale. Damit können in einem der beiden Signalpfade auftretende Sensorsignalfehler nicht zu einem Fehlauslösen der Sicherheitseinrichtung 2 führen. Da auch unterschiedliche Algorithmen zur Berechnung der Entscheidungskriterien e1 und e2 in den beiden Signalpfaden verwendet werden, kann auch eine Störung in den Recheneinheiten nicht zu einer Fehlauslösung führen. Nur wenn die beiden über ein UND-Gatter 7 verknüpften Entscheidungskriterien e1 und e2 erfüllt sind, gibt das UND-Gatter 7 an seinem Ausgang ein Auslösesignal as1 für die Sicherheitseinrichtung 2 ab.

Wenn das Fahrzeug vom Boden abhebt und damit schwerelos wird, können Beschleunigungen des Fahrzeugs in Richtung der Längsachse und der Querachse nicht mehr gemessen werden. Um auch in diesem Fall ein zweites Entscheidungskriterium e2 ermitteln zu können, ist ein Schwellwertentscheider 8 vorgesehen, der, wenn der Betrag der gemessenen Beschleunigung az in Richtung der Hochachse z den z.B. 0,2 fachen Wert der Erdbeschleunigung unterschreitet, für ein Auslösen der Sicherheitseinrichtung 2 entscheidet. Die Ausgangssignale der beiden Schwellwertentscheider 6 und 8 liegen an den Eingängen eines ODER-Gatters 9 an, das an seinem Ausgang das zweite Entscheidungskriterium e2 abgibt, wenn entweder im Schaltblock 6 oder im Schaltblock 8 oder in beiden gleichzeitig der jeweilige Schwellenwert erreicht ist.

Bei einem seitlichen Aufprall eines Fahrzeugs auf ein niedriges Hindernis, z.B. einen Bordstein, können die Fahrzeuginsassen bereits bei der anfänglich auftretenden hohen Beschleunigung verletzungsgefährdend bewegt werden. Damit auch in diesem Fall, selbst wenn es nicht zu einem Überschlag des Fahrzeugs kommt, die Sicherheitseinrichtung ausgelöst wird, ist, wie Figur 1 zeigt, eine eigene Schaltung vorgesehen, die ein Auslösesignal as2 erzeugt. Die Schaltung enthält zwei Schwellwertentscheider 10 und 11, die über ein UND-Gatter 12 miteinander verknüpft sind. Der Schwellwertentscheider 10 erhält als Eingangssignal eine um die Längsachse x des Fahrzeugs gemessene Drehrate $\omega x$. Der zweite Schwellwertentscheider 11 erhält das Meßsignal ay eines hohe Beschleunigungen (größer als 10g) des Fahrzeugs in Richtung seiner Querachse y messenden Beschleunigungssensors. Überschreiten sowohl die Drehrate $\omega x$ als auch die Beschleunigung ay jeweils eine vorgegebene empirisch ermittelte Schwelle, so ist davon auszugehen, daß der seitliche Aufprall des Fahrzeugs auf ein niedriges Hindernis zu einer so stark beschleunigten Kippbewegung führt, daß zum Schutz der Insassen die Sicherheitseinrichtung ausgelöst werden muß. Dementsprechend stellt der Ausgang des UND-Gatters 12 ein Auslösesignal bereit.

Um auch bei dieser Schaltung ein Fehlauslösen durch z.B. fehlerhafte Meßsignale zu vermeiden, ist ein Parallelzweig vorgesehen mit zwei Schwellwertentscheidern 13 und 14, deren Ausgangssignal zusammen mit dem Ausgangssignal des UND-Gatters 12 einem weiteren UND-Gatter 15 zugeführt ist. In dem Parallelzweig wird ein zweites Kriterium für das Auslösesignal as2 gebildet. Und erst wenn beide an den Eingängen des UND-Gatters 15 anliegenden Signalzweige für ein Auslösen der Sicherheitseinrichtung entscheiden, gibt das UND-Gatter 15 das Auslösesignal as2 ab.

Dem Schwellwertentscheider 13 im Parallelzweig wird das Meßsignal ay' eines geringere Beschleunigungen (bis 3g) des Fahrzeugs in Richtung seiner Querachse y messenden Beschleunigungssensors zugeführt. Übersteigt diese geringere Beschleunigung ay' eine vorgegebene, empirisch ermittelte Schwelle und liegt die gemessene Beschleunigung ay' für eine empirisch ermittelte Mindestzeitdauer oberhalb der Schwelle, so ist dieses zweite Kriterium für das Auslösen der Sicherheitseinrichtung erfüllt. Der zweite Schwellwertentscheider 14 überprüft, ob die gemessene Beschleunigung ay' ihre vorgegebene Schwelle für die Mindestzeitdauer überschreitet. Wenn also die in beiden Signalzweigen ermittelten Kriterien für das Auslösen der Sicherheitseinrichtung 2 gleichzeitig erfüllt sind, kann davon ausgegangen werden, daß das Auslösesignal as2 auf einer fehlerfreien Sensierung beruht.

Die beiden Auslösesignale as1 und as2 werden einem ODER-Gatter 16 zugeführt. Wenn eines der beiden Auslösesignale as1 oder as2 an dem ODER-Gatter 16 anliegt, erhält die Sicherheitseinrichtung 2 das eigentliche Auslösesignal as.

Bei einem seitlichen Aufprall der Räder eines Fahrzeugs auf einen Bordstein treten relativ hohe laterale Beschleunigungen auf, die eine rasche Insassenverlagerung zur Seite hin bewirken. Dadurch, daß das Hauptauslösekriterium - Beschleunigung ay in Richtung der Querachse y - zusätzlich noch mit der Drehrate $\omega x$ verknüpft wird, kann mit großer Sicherheit festgestellt werden, ob ein Überrollvorgang droht. In einem solchen Fall muß ein Auslösen der Sicherheitseinrichtung schon dann erfolgen, wenn das Fahrzeug erst einen Drehwinkel von 10° erreicht hat. Bei Fahrzeugdrehungen, die auf andere Einflüsse als auf einen seitlichen Aufprall auf ein niedriges Hindernis (Bordstein) zurückzuführen sind, darf bei so einem geringen Drehwinkel von 10° noch längst keine Auslösung einer Sicherheitseinrichtung erfolgen. Insofern ist es sinnvoll, ein vorangehend beschriebenes Sensorsystem ausschließlich für die Erkennung eines seitlichen Aufpralls auf ein niedriges Hindernis vorzusehen. Bei der Wahl der Schwellen für ωx, ay und ay' ist die seitliche Insassenbewegung zu berücksichtigen. Es muß die Sicherheitseinrichtung so rechtzeitig ausgelöst werden, daß z. B. eine Gurtstraffung noch einen Effekt hat; d.h. der Insasse darf noch nicht aus dem Gurt herausgerutscht sein . Generell darf sich der Insasse noch nicht zu weit seitlich bewegt haben.

## Patentansprüche

1. Anordnung zum Erzeugen eines Auslösesignals für eine Sicherheitseinrichtung in einem Fahrzeug bei einem Überrollvorgang, wobei
erste Mittel vorgesehen (1) sind, die aus der um die Längsachse (x) des Fahrzeugs (FZ) gemessenen Drehrate (ωx) ein erstes Entscheidungskriterium (e1) für das Auslösen einer Sicherheitseinrichtung (2) im Fahrzeug (FZ) herleiten, und wobei zweite Mittei (5,6) vorhanden sind, die unabhängig von den ersten Mitteln (1) aus den mindestens in Richtung der Querachse (y) des Fahrzeugs (FZ) gemessenen Beschleunigungen (ay) ein zweites Entscheidungskriterium (e2) bilden,
**dadurch gekennzeichnet, daß**
eine erste Schaltung (7) dann ein erstes Auslösesignal (as1) für die Sicherheitseinrichtung (2) abgibt, wenn beide Entscheidungskriterien (e1, e2) gleichzeitig erfüllt sind, und
eine zweite Schaltung (10,11,12) ein zweites Auslösesignal (as2) erzeugt, wenn gleichzeitig die Drehrate (ωx) um die Längsachse (x) und die Beschleunigung (ay) des Fahrzeugs in Richtung der Querachse (y) jeweils eine Schwelle überschreiten, wobei die Schwelle für die Drehrate (ωx) und die Schwelle für die Beschleunigung (ay) so gewählt sind, daß bei einem. seitlichen Aufprall des Fahrzeugs auf ein niedriges Hindernis -z. B. Bordstein- ein Auslösesignal (as2) generiert wird.

2. Anordnung nach Anspruch 1, **dadurch gekennzeichnet, dass** die Schaltung parallel zu den Schwellwertentscheidungen (10, 11) der Drehrate (ωx) um die Längsachse (x) und der Beschleunigung (ay) in Richtung der Querachse (y) eine zweite Schwellwertentscheidung (13) bezüglich der Beschleunigung (ay') in Richtung der Querachse (y) durchgeführt, wobei der zweiten Schwellwertentscheidung (13) eine niedrigere Beschleunigungsschwelle zugrundeliegt als der ersten Schwellwertentscheidung (11), dass der Parallelzweig, sobald die niedrigere Beschleunigungsschwelle für eine bestimmte Zeitdauer überschritten worden ist, auf ein Auslösen der Sicherheitseinrichtung (2) entscheidet und dass die Schaltung (10, 11, 12, 13, 14, 15) ein zweites Auslösesignal (as2) nur dann abgibt, wenn in beiden Schaltungszweigen gleichzeitig auf Auslösen entschieden worden ist.

## Claims

1. Arrangement for generating a triggering signal for a safety device in a vehicle when it rolls over, first means (1) being provided which derive a first decision criterion (e1) for the triggering of a safety device (2) in the vehicle (FZ) from the rotational speed (ωx) measured about the longitudinal axis (x) of the vehicle (FZ), and second means (5, 6) being provided which, independently of the first means (1), form a second decision criterion (e2) from the accelerations (ay) measured at least in the direction of the transverse axis (y) of the vehicle (FZ), **characterized in that** a first circuit (7) outputs a first triggering signal (as1) for the safety device (2) if both decision criteria (e1, e2) are fulfilled simultaneously, and a second circuit (10, 11, 12) generates a second triggering signal (as2) if at the same time the rotational speed (ωx) about the longitudinal axis (x) and the acceleration (ay) of the vehicle in the direction of the transverse axis (y) each exceed a threshold, the threshold for the rotational speed (ωx) and the threshold for the acceleration (ay) being selected in such a way that when there is a lateral impact of the vehicle against a low obstacle - for example curb - a triggering signal (as2) is generated.

2. Arrangement according to Claim 1, **characterized in that**, in parallel with the threshold value decisions (10, 11) of the rotational speed (ωx) about the longitudinal axis (x) and the acceleration (ay) in the direction of the transverse axis (y), the circuit makes a second threshold value decision (13) with respect to the acceleration (ay') in the direction of the transverse axis (y), a lower acceleration threshold being used as the basis for the second threshold value decision (13) than as the basis for the first threshold value decision (11) **in that**, as soon as the lower acceleration threshold has been exceeded for a specific time period, the parallel branch decides to trigger the safety device (2), and **in that** the circuit (10, 11, 12, 13, 14, 15) outputs a second triggering signal (as2) only if a decision to trigger has been taken simultaneously in both circuit branches.

**Revendications**

1.  Dispositif pour créer un signal de déclenchement pour une installation de sécurité équipant un véhicule en cas de retournement, comprenant:

    -   des premiers moyens (1) qui forment un premier critère de décision (e1) à partir de la vitesse de rotation ωx mesurée autour de l'axe longitudinal x du véhicule (FZ) à pour déclencher l'installation de sécurité (2) dans le véhicule (FZ) et
    -   des seconds moyens (5, 6) qui indépendamment des premiers moyens (2), forment à partir d'au moins une accélération (ay) mesurée dans la direction de l'axe transversal (ay) du véhicule (FZ), un second critère de décision (e2),

    **caractérisé en ce que**

    •   un premier circuit (7), émet un premier signal de déclenchement (as1) pour installation de sécurité (2), si les deux critères de décision (e1,e2) sont remplis simultanément
    •   et un second circuit (10, 11, 12) générant une second signal de déclenchement (as2) si en même temps la vitesse de rotation (ωx) autour de l'axe longitudinal (x) et l'accélération (ay) du véhicule dans la direction de l'axe transversal (y) dépassent chacun un seuil, le seuil de la vitesse de rotation (ωx) et le seuil de l'accélération (ay) étant choisis pour qu'en cas de choc latéral du véhicule sur un obstacle bas comme, par exemple, une bordure de trottoir, le système génère un signal de déclenchement (as2).

2.  Dispositif selon la revendication (1),
    **caractérisé en ce que**
    le circuit comporte en parallèle aux décisions à un seuil (10, 11) de la vitesse de rotation (ωx) autour de l'axe longitudinal (x) et de l'accélération (ay) de la direction de l'axe transversal (y), une seconde décision à seuil (13) concernant l'accélération (ay') dans la direction de l'axe transversal (y),
    la seconde décision à seuil (13) supposant un seuil d'accélération plus faible que le premier seuil de décision (11), pour que la branche parallèle, dès que le seuil d'accélération bas a été déplacé pendant une durée donnée, décide le déclenchement de l'installation de sécurité (2) et que le circuit (10,11,12,13,14,15) ne fournisse qu'un signal de déclenchement (as2) si dans les deux branches du circuit il a été décidé en même temps de déclencher.

Fig. 1

8

Fig. 2

Fig. 3

Fig. 4

```
                  ┌─────────────────────┐  ⟋20
                  │ Messen der Winkel-   │
                  │ geschwindigkeiten    │
                  │ ωx , ωy , ωz         │
                  └─────────────────────┘
                            │
                  ┌─────────────────────┐  ⟋21
                  │ Berechnen zeitlicher │
                  │ Änderungen der       │
                  │ Kardanwinkel φ̇y, φ̇x  │
                  └─────────────────────┘
                            │
                  ┌─────────────────────┐  ⟋22
                  │ Integration von      │
                  │ φ̇y ──→ φy            │
                  │ φ̇x ──→ φx            │
                  └─────────────────────┘
                            │
                  ┌─────────────────────┐  ⟋23
                  │ Berechnen            │
                  │ Transformationsmatrix│
                  │ aus φy, φx           │
                  └─────────────────────┘
                            │
                  ┌─────────────────────┐  ⟋24
                  │ Transformation von   │
                  │ fahrzeugfestem Punkt S│
                  │ und fahrzeugfester   │
                  │ Fläche (A1,A2,A3,A4) in│
                  │ horizontale Ebene    │
                  │ (A1p,A2p,A3p,A4p)    │
                  └─────────────────────┘
                            │
                  ┌─────────────────────┐  ⟋25      ⟋26
                  │ Entscheidung:        │      ┌──────────────┐
                  │ Liegt transformierter│ nein │ Überrollen   │
                  │ Punkt Sp innerhalb   │─────→│ signalisieren│
                  │ der transformierten  │      └──────────────┘
                  │ Fläche(A1p,A2p,A3p,A4p)│            ▲
                  └─────────────────────┘             │
                            │                         │
                  ┌─────────────────────┐  ⟋27        │
                  │ Berechnen der        │            │
                  │ potentiellen Energie ΔU│          │
                  └─────────────────────┘             │
                            │                         │
                  ┌─────────────────────┐  ⟋28        │
                  │ Berechnen der        │            │
                  │ Rotationsenergie ΔW  │            │
                  └─────────────────────┘             │
                            │                         │
              nein ┌─────────────────────┐  ⟋29  ja   │
              ←────│ Entscheidung:       │────────────┘
                   │ ΔW > ΔU             │
                   └─────────────────────┘
```